# EUROPÄISCHE PATENTSCHRIFT

(11) **EP 1 232 883 B1**
(45) Veröffentlichungstag und Bekanntmachung des Hinweises auf die Patenterteilung: **17.01.2007**
(21) Anmeldenummer: 02002745.4
(22) Anmeldetag: 07.02.2002
(51) Int. Cl.: B60G 17/04, B60G 21/073

(54) **Hydropneumatisches Fahrzeugaufhängungssystem**
Hydropneumatic vehicle suspension system
Suspension hydropneumatique de véhicule

(30) Priorität: 15.02.2001 DE 10107631
(43) Veröffentlichungstag der Anmeldung: 21.08.2002
(73) Patentinhaber: Carl Freudenberg KG, 69469 Weinheim (DE)
(72) Erfinder: Brandenburger, Walter, 41470 Neuss (DE)

(56) Entgegenhaltungen:
- DE-A- 19 719 076
- DE-A- 19 719 077
- US-A- 5 338 010
- US-A- 6 145 859

## Beschreibung

### Technisches Gebiet

Die Erfindung betrifft ein Verfahren und eine Vorrichtung zur Steuerung des Federungsverhaltens bei Fahrzeugen mit hydropneumatischen Federungseinrichtungen und stark veränderbaren Achslastverhältnissen, insbesondere an Fahrzeugen bei denen abhängig vom Arbeitseinsatz die Vorderachse einem niedrigen, mittleren oder hohen statischem Belastungsbereich ausgesetzt ist und die Federungseinrichtung zwischen den ungefederten und gefederten Massen über doppelt wirkende Hydraulikzylinder verfügt, deren Druckleitungen mit einer Pumpe verbindbar sind, wobei ein Druckregelventil in die Druckleitung zu den Ringräumen eingefügt ist, das den Druck in den Ringräumen ständig auf einen vorgegebenen Druckwert abgleicht.

### Stand der Technik

Durch die DE 41 20 758 A1 ist eine hydropneumatische Federung für Kraftfahrzeuge mit großen Achslastspreizungen bekannt, bei der doppelt wirkende Hydraulikzylinder eingesetzt werden, deren Zylinderräume mit einem ersten Speicher und deren kolbenstangenseitige Ringräume mit einem zweiten Speicher verbunden sind, wobei ein Niveauregelventil die Höhenlage regelt und ein druckgesteuertes Ventil ein vorgegebenes Druckverhältnis zwischen den Drücken des ersten und des zweiten Speichers in Abhängigkeit von der Belastung der hydropneumatischen Stellglieder stetig regelt. Dabei wird das druckgesteuerte Ventil sowohl vom Druck in der Druckleitung zu den Zylinderräumen als auch vom Druck in der Druckleitung zu den Ringräumen betätigt. Es wird eine stetige Regelung in Abhängigkeit von der Belastung der hydropneumatischen Stellglieder erreicht. Der Ringraumdruck wird lastabhängig geregelt.

Eine wirtschaftlichere, einfachere Ausführungsform ist in der DE 42 42 448 C1 enthalten, mit dem Vorteil, Load-Sensing-Pumpen einsetzen zu können. Nach Belastungsänderungen und anschließenden Auf- oder Abregelvorgängen werden statische Belastungsänderungen ausgeregelt. Es kommt ein Druckregelventil zum Einsatz, welches das Druckniveau im Ringraumfederkreis konstant hält. Bei mittleren Lasten wird die Federung jedoch hart und teilweise unkomfortabel.

Eine Verbesserung der Verhältnisse hinsichtlich Komfort wird bei der Einrichtung nach DE 197 19 077 A1 dadurch erreicht, dass als Druckregelventil ein lastangepaßtes Zweistufenduckregelventil verwendet wird. Hierdurch ist es möglich, die Federung den Belastungsfällen besser anzupassen. Eine Änderung des Ringraumdrucks zwischen einem unteren und einem oberen Grenzwert ist lastabhängig möglich.

Die DE 197 19 076 A1 zeigt eine Einrichtung, die eine Vergrößerung der Lastverhältnisse ohne erhöhte Beanspruchung der Bauteile zulässt und auch eine Verbesserung des Fahrkomforts im Sinne einer weicheren Federung erreicht. Die Regelfeder und die Positionierfeder des Druckregelventils sind so aufeinander abgestimmt, dass eine lastabhängige Ringraumdruckänderung erreicht wird, die eine Erhöhung der Federrate bei geringer Achslast bewirkt mit der Möglichkeit, die Federrate im mittleren Lastbereich zur Komfortverbesserung weicher zu gestalten. In Versuchen konnten die Funktionsvorteile nachgewiesen werden. Unbefriedigend sind jedoch bei dieser Einrichtungsart die für die Reproduzierbarkeit der Funktion geforderten eingeschränkten Fertigungstoleranzen und die ungünstige Baugröße. Für den permanenten Federungseinsatz erweist sich die Schnelligkeit der Druckanpassung als unzureichend.

### Darstellung der Erfindung

Der Erfindung liegt deshalb die Aufgabe zugrunde, eine Steuerung zu schaffen, bei der für eine wirtschaftliche Fertigung die Toleranzanforderungen entschärft sind, ein geringes Einbauvolumen ermöglicht wird und die geforderte schnelle Druckanpassung realisiert ist. Als niedriger Belastungsbereich der Vorderachse des Fahrzeugs wird der Bereich der gefederten Achslast verstanden, der eintritt, wenn das Fahrzeug an seinem rückwärtigen Ende mit einer Last, beispielsweise einem Pflug, versehen ist. Der hohe Belastungsbereich liegt vor, wenn frontseitig am Fahrzeug ein Ladegerät oder dergleichen angebracht ist. Der mittlere Belastungsbereich liegt bei einem unbelasteten Fahrzeug vor.

Versuche haben gezeigt, dass eine komfortable Federungsauslegung im mittleren Belastungszustand bei Achslastreduzierung durch Heckanbaugeräte besonders bei weit ausragendem Schwerpunkt mit nicht vertretbarem Schwingen in die Endanschläge verbunden ist, sodass entweder eine zusätzliche Dämpferfunktion oder eine Federratenverhärtung einzubringen ist.

Die Lösung der gestellten Aufgabe wird bei einem Verfahren beziehungsweise Vorrichtung der eingangs genannten Gattung erfindungsgemäß dadurch erreicht, dass in niedrigen Belastungsbereich an der Vorderachse der Druck in den Ringräumen der Federzylinder angehoben ist. Im mittleren Belastungsbereich ist der Druck im Ringraum zum Zwecke der Komfortsteigerung reduziert und im niedrigen Lastbereich verhärtet sich die Federrate durch Ringraumdruckerhöhung.

In Verbindung mit der Speicherauslegung kann die Steuerung so abgestimmt werden, dass der Druck in den Ringräumen für den mittleren und hohen Belastungsfall konstant bleiben kann. Andererseits ist es aber auch möglich, den Ringraumdruck auch bei höherer Belastung der Vorderachse zu erhöhen.

Die Anhebung des Ringraumdrucks kann auf unterschiedliche Werte eingestellt sein. Die Werte sind auf die Schleppergröße und den jeweiligen Belastungszuständen abzustimmen und sollte in Verbindung mit der Ringfläche des Federzylinders in der Größenordnung von 20 - 40 bar liegen.

Die Speicherauslegung kann so abgestimmt werden, dass der Druckwert in den Ringräumen sowohl im mittleren als auch im hohen Lastbereich konstant bleiben kann

Die Vorrichtung zur Durchführung des Verfahrens sieht die Verwendung eines Vorsteuerventils vor, welches vom Zulaufdruck zu den Zylinderräumen sowie vom Ablaufdruck gesteuert wird.

Das mit einem Vorspannkolben ausgestattete Druckregelventil regelt einen unteren und einen oberen Druckwert. Welcher Druck zu regeln ist, wird von der Vorsteuerung bestimmt.

Als Vorsteuerventil kann auch ein 3/2 - Wegeventil eingesetzt werden, dass über einen Drucksensor im Zylinderfederkreis elektrisch anzusteuern ist. Bei geforderter Verhärtung der Federrate im hohen Belastungsbereich ist eine weitere Umsteuerfunktion einzubringen.

Die Vorteile der Erfindung werden bei einer weichen Anfangsgrundeinstellung in der Federauslegung erreicht, die einen guten Fahrkomfort im mittleren Belastungsbereich ergibt und einer härteren Abstimmung im niedrigen Belastungsbereich, wodurch die Problematik des Aufschwingens in die Endanschläge vermieden wird.

### Kurzbeschreibung der Zeichnung

Anhand der beiliegenden Zeichnung wird die Erfindung näher erläutert.

Es zeigt:
- Fig. 1: ein Federungsdiagramm, in dem die Achsfederrate und der Zylinderdruck in Bezug zur Achslast aufgetragen ist,
- Fig. 2: das Federungsdiagramm mit erhöhtem Ringraumdruck im niedrigen Belastungsbereich,
- Fig. 3: das Federungsdiagramm mit erhöhtem Ringraumdruck im niedrigen und hohen Belastungsbereich
- Fig. 4: einen Schaltplan zur Durchführung der Ringraumdruckveränderung.

### Ausführung der Erfindung

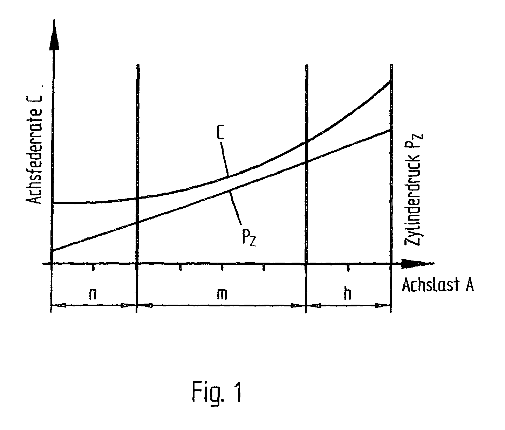

In der Fig. 1 ist die Achsfederrate C und der Zylinderdruck P_{z} in Bezug zur Achslast A an der Vorderachse eines Fahrzeugs bei konstantem Ringraumdruck P_{R} aufgetragen. Die Kurve C gibt den Verlauf der Achsfederrate C und die Kurve P den Verlauf des Zylinderdrucks über der Achslast A wieder. Dabei ist die Achslast A in einen niedrigen n, mittleren m und hohen h Belastungsbereich aufgeteilt. Der niedrige Belastungsbereich n liegt dann vor, wenn das Fahrzeug an seinem rückwärtigen Ende mit einer Last versehen ist. Das kann beispielsweise bei einem Ackerschlepper ein Pflug sein. Die Vorderachsfederung ist dann entlastet und befindet sich im niedrigen Belastungsbereich n. Eine hohe Achslast und damit ein hoher Belastungsbereich h der Vorderachsfederung liegt dann vor, wenn am Vorderteil des Schleppers ein Ladegerät oder dergleichen angebracht ist. Die Vorderachse hat dann ihre höchste Achslast. Der mittlere Belastungsbereich m der Achslast ist dann gegeben, wenn das Fahrzeug weder vorn noch hinten mit Geräten belastet ist. Die Belastungsgrenzen werden konstruktiv festgelegt und sind auf den Schleppertyp mit den gewählten Anbaugeräten abgestimmt.

Bei bekannten hydropneumatischen Federungen mit konstantem Ringraumdruck werden für die Belastungsbereiche der niedrigen und hohen Achslasten die geforderten Federwege an den Federungseinrichtungen erreicht und damit ein guter Fahrkomfort erzielt. Im mittleren Achslastbereich treten jedoch überwiegend kurze Federwege auf, welche einen unbefriedigenden Fahrkomfort ergeben. Das Fahrverhalten der hydropneumatische Federung wirkt im mittleren Lastbereich unkomfortabel und hart.

Die Achsfederrate C ist abhängig von der gewählten Gasvorspannung und dem Volumen des Hydrospeichers. Wird die Achsfederrate C für den mittleren Belastungsfall m auf hohem Fahrkomfort abgestimmt, so hat diese Einstellung immer zur Folge, dass die Achse im niedrigen Lastbereich n ohne zusätzliche Dämpferfunktionen in nicht zu vertretendem Maße in die Endanschläge anschlägt.
Dies lässt sich vermeiden, indem man die Achsfederrate im niedrigen Belastungsbereich durch Ringraumdruckerhöhung verhärtet.

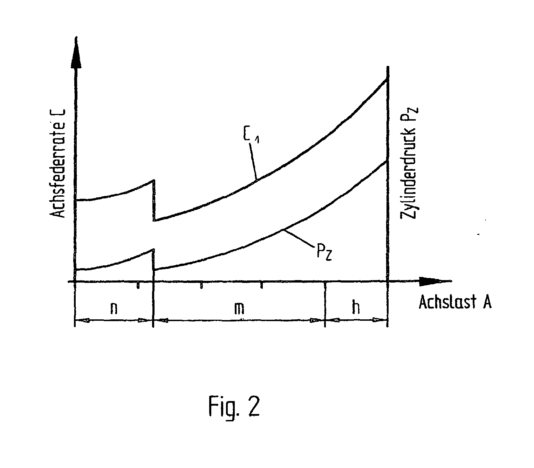

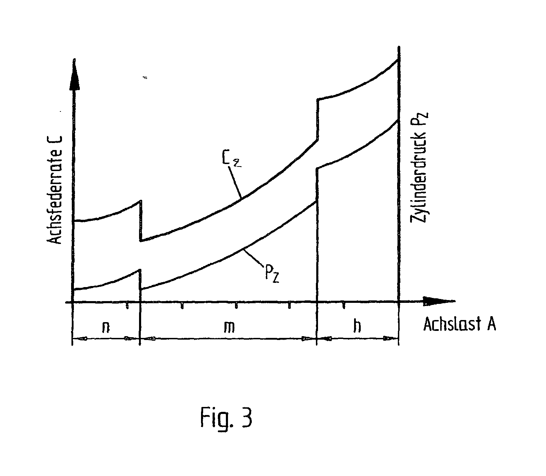

In Fig. 2 und 3 ist die Wirkung der Ringraumdruckerhöhung im Kurvenverlauf der Achsfederrate C und dem Zylinderdruck P_{z} dargestellt. In Fig. 2 erfolgt die Ringraumdruckerhöhung nur im niedrigen Belastungsbereich n. Fig. 3 zeigt das Diagramm, wenn auch im hohen Belastungsbereich h eine Federratenverhärtung gefordert ist. Es entstehen die Kurven C₁ und C₂. Es zeigte sich, dass bei beiden Ausführungsformen ein hoher Fahrkomfort im mittleren Belastungsbereich m erzielt wird. Der der Erfindung zugrunde liegende Gedanke ist prinzipiell bei allen Fahrzeugen anwendbar, die mit hydropneumatischen Federungseinrichtungen versehen sind und bei denen in Abhängigkeit von ihrem Arbeitseinsatz große Achslastverhältnisse auftreten.

Fahrversuche haben gezeigt, dass die Wirkung der Anpassung von Achsfederrate C an die jeweiligen Belastungszustände durch eine beschleunigte Ringraumdruckänderung optimiert werden kann. Dies gilt besonders für Federungssysteme ohne Federungsblockierung.

Als erweitertes Erfindungsmerkmal ist aus diesem Grund das vorgesteuerte Druckregelventil mit einem externen Reaktionsdruckabgriff ausgestattet, der eine Kompensierung der internen Durchflusswiderstände bei klein gestalteten Steuerblöcken ermöglicht und somit die geforderten beschleunigten Druckänderungen im Ringraum bewirkt.

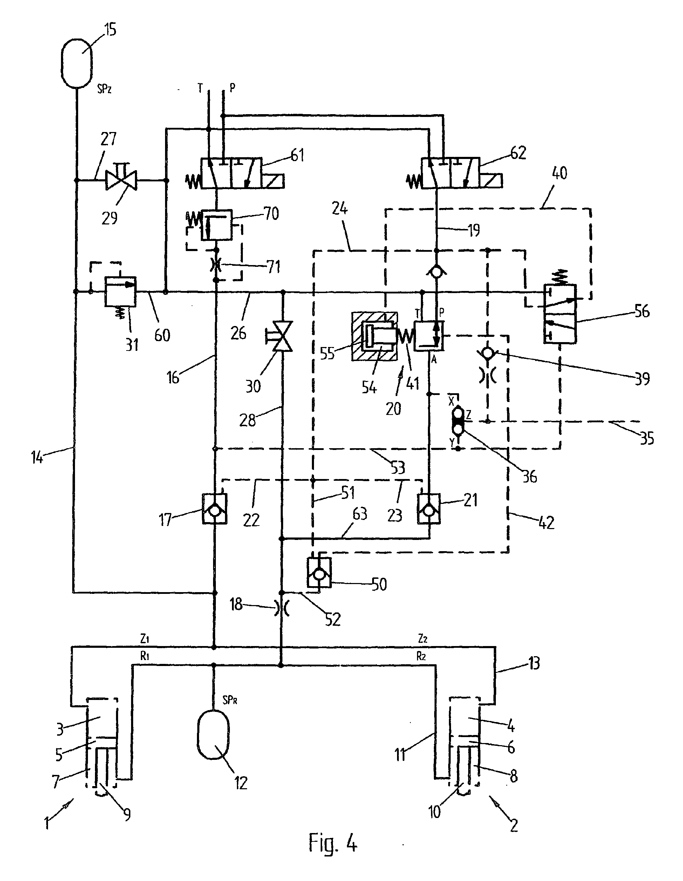

In der Fig. 4 ist ein Schaltplan für ein Schlepperfahrzeug gezeigt, bei dem die Federungseinrichtung über doppelt wirkende Hydraulikzylinder verfügt, deren Druckräume mit einer Load-Sensing-Pumpe verbindbar sind.

In dem gezeigten Schaltplan der Fig. 4 sind die Federzylinder 1 und 2 vorgesehen, die zwischen den nicht näher dargestellten ungefederten und gefederten Massen angeordnet sind. Die Federzylinder 1 und 2 besitzen die Kolbenräume 3 und 4, welche durch die Kolben 5 und 6 von den Ringräumen 7 und 8 getrennt sind. Die Kolbenstangen 9 und 10 sind aus den Federzylindern 1 und 2 abgedichtet nach außen geführt.

Die beiden Ringräumen 7 und 8 sind durch die Verbindungsleitung 11 miteinander verbunden und an den Hydrospeicher 12 angeschlossen. Eine zweite Verbindungsleitung 13 verbindet die Kolbenräume 3 und 4. Die Verbindungsleitung 13 ist über eine Leitung 14 mit dem Hydrospeicher 15 verbunden. In die Leitung 14 mündet die Zuleitung 16, in die ein entsperrbares Rückschlagventil 17 eingebaut ist. In die Verbindungsleitung 11 mündet die Zuleitung 63, in welche die Drossel 18 eingefügt ist, und die ebenfalls ein entsperrbares Rückschlagventil 21 hat.

Die beiden Rückschlagventile 17 und 21 öffnen selbsttätig in Richtung der Kolbenräume 3 und 4 beziehungsweise Ringräume 7 und 8. Sie können über die Steuerleitung 24 und die davon abzweigenden Leitungen 22 und 23 für einen Flüssigkeitsstrom in Gegenrichtung entsperrt werden. Die Steuerleitung 24 ist an die Zuleitung 19 angeschlossen. In die Zuleitung 19 ist das Druckregelventil 20 eingesetzt, mit dem Druckanschluss P, Ablaufanschluss T und dem Druckanschluss A für den geregelten Druck. An den Ablaufanschluss T des Druckregelventils 20 ist die Ablaufleitung 26 angeschlossen, die zu einem Vorratsbehälter führt. Die Leitung 14 und die Zuleitung 63 sind mit der Ablaufleitung 26 über die Entleerungsleitungen 27 und 28 verbunden, in die Absperrventile 29 und 30 eingebaut sind. Die Leitung 14 und die Ablaufleitung 26 sind über eine Zwischenleitung 60 verbunden, in die ein Druckbegrenzungsventil 31 eingesetzt ist. Die Zuleitungen 16 und 19 sind jeweils mit einem Magnet-Ventil 61 und 62 verbunden, die mit den Druckanschlüssen P und den Ablaufanschlüssen T versehen sind. Die Ventile 61 und 62 dienen der Niveauregelfunktion, die je nach Niveaulage des Fahrzeugs die Zuleitungen 16 und 19 mit einer Load-Sensing-Pumpe oder einem Vorratsbehälter verbinden. In der im Schaltplan gezeigten Schaltung sind die Leitungen 16 und 19 mit dem Ablaufanschluss T verbunden. Dieses ist die Neutralstellung.

Die als Niveauregelventile dienenden Ventile 61 und 62 sind stromlos und befinden sich in ihrer Neutralstellung. Beide Zuleitungen 16 und 19 sind, wie in dem Schaltplan gezeigt, mit dem Ablauf T verbunden. Durch den dann fehlenden Steuerdruck können die Rückschlagventile 17 und 21 nicht entsperrt werden. Sie sind geschlossen und die Kolbenräume 3 und 4 sowie auch die Ringräume 7 und 8 sind von jeglicher Zu- oder Ableitung getrennt. Die Verbindungen zu den Hydrospeichern 12 und 15 bleiben aber bestehen, so dass die Federung des Fahrzeugs gewährleistet ist. Durch den drucklosen Zustand der Zuleitung 19 wird auch die Steuerleitung 35 zur Load-Sensing-Pumpe drucklos, da sie sich über das Rückschlagventil 39 in die Zuleitung 24 entlasten kann. Die Load-Sensing-Pumpe kann dann im Stand-by-Betrieb mit vergleichsweise geringem Leistungsbedarf betrieben werden.

Sobald sich die statische Belastung erhöht, schieben die Kolbenstangen 9 und 10 die Kolben 5 und 6 nach oben, so dass sich die Kolbenräume 3 und 4 verkleinern und Drucköl unter Druckanstieg in den Speicher 15 gefördert wird, während sich die Ringräume 7 und 8 vergrößern und Drucköl unter Druckreduzierung aus dem Speicher 12 nachgefördert wird.

Die Abstandsänderung wird über einen Höhensensor abgegriffen, dessen Signal in ein elektronisch gefiltertes Steuersignale umgewandelt die MagnetVentile 61 und 62 bestromt und somit in Aufregelfunktion schaltet. In dieser Schaltstellung werden die Zuleitungen 16 und 19 mit dem Pumpendruck P verbunden und über die Leitung 19 wird auch der Druck in der Steuerleitung 24 erhöht und die Rückschlagventile 17, 21 und 50 entsperrt.

Dem Wechselventil 36 werden die Drücke an den Rückschlagventilen 17 und 21 zugeführt, das den höchsten Druck in die Steuerleitung 35 einspeist, damit die Load-Sensing-Pumpe auf das geforderte Druckniveau einregeln kann.

Druckmittel strömt in die Druckleitung 14 ein und erhöht den Druck im Speicher 15 auf den geforderten statischen Druck und anschließend über die Leitung 13 in die Zylinderräume 3 und 4 bis die Niveaulage erreicht ist und die Ventile 61 und 62 in ihre Neutralstellung zurückschalten.

Während des Regelvorgangs wird der Druck in den Ringräumen 7 und 8 und im Druckspeicher 12 durch das 2-Stufen-Druckregelventil 20 auf ein vom Vorsteuerventil 56 vorbestimmtes lastabhängiges Druckniveau eingeregelt. Das Vorsteuerventil 56 wird über die Steuerleitung 53 mit dem Zylinderdruck aus der Druckverbindung 16 beaufschlagt und übermittelt dem Druckregelventil 20 über die Steuerleitung 40 das zu regelnde Druckniveau in der Weise, dass der beaufschlagte Druck im Vorsteuerventil 56 gegen eine Feder wirkt und druckabhängig einen Kolben verschiebt, der im mittlerem und hohen Druckniveau bei den Belastungsfällen m und h die Steuerleitung 40 mit der Ablaufleitung 26 verbindet und somit drucklos schaltet und im niedrigem Niveau die Leitung 40 mit der Druckleitung 63 verbindet, sodass im niedrigem Lastbereich n Drucköl zum Steuerraum 54 fließt und der Vorspannkolben 55 die Regelfeder 41 im Regelventil 20 höher vorspannt und somit zur Erhöhung der Federrate ein höheres Ringraumdruckniveau geregelt wird.

Der Steuerdruck für die Regelfunktion des Druckregelventils 20 wird extern zwischen dem Rückschlagventil 21 und einer vor der Verbindungsleitung 11 eingefügten Drossel 18, die zur Abstimmung der Regelzeit dient, im Abzweig 52 abgegriffen und ist über das entsperrbare Rückschlagventil 50, dessen Steuerleitung 51 zum Entsperren mit der Steuerleitung 24 angeschlossen ist, mit der Steuerleitung 42 verbunden.

Bei einer Belastungsminderung an den Federzylindern 1 und 2 findet eine Vergrößerung der Kolbenräume 3 und 4 und eine Verkleinerung der Ringräume 7 und 8 statt. Das Ventil 62 wird bestromt und schaltet in Abregelstellung, in der sichergestellt ist, dass die Rückschlagventile 17 und 21 entsperrt bleiben bzw. entsperrt werden. Über das entsperrte Rückschlagventil 17 kann dann Drucköl über die Leitung 16 abströmen und durch das entsperrbare Rückschlagventil 21 Druckmittel zum Einregeln des Druckniveaus fließen, bis die Niveaulage wieder erreicht ist.

In weiterer Ausgestaltung der Erfindung ist es möglich, das Vorsteuerventil 56 mit doppelter Umsteuerung auszubilden, sodass auch im hohen Belastungsbereich h zur Erzielung einer härteren Federrate die Steuerleitung 40 mit der Druckleitung 19 verbunden und das Druckniveau im Ringraum angehoben ist. Bei einer solchen Ausführungsform kann das Vorsteuerventil 56 als 3-Stellungsventil ausgebildet sein.

Der Druckregler 70 im Zusammenwirken mit der Drossel 71 in der Druckleitung 16, bekannt durch Patentanmeldung DE 197 190 75, dient zur Regelung der Druckmittelzu- und abflussmenge zum Zylinderfederkreis, der sich aus dem Verbund zwischen den Zylinderräumen 3 und 4 mit dem Federspeicher 15 ergibt.

## Patentansprüche

1. Vorrichtung zur Steuerung des Federungsverhaltens von Fahrzeugen mit stark veränderten Lastverhältnissen und einer hydropneumatischen Federungseinrichtung, bei der zwischen den gefederten und ungefederten Massen Federzylinder (1, 2) angeordnet sind, die die Last tragende Kolbenräume (3, 4) und die Kolbenstange abgedichtet umgebende druckbeaufschlagte Ringräume (7, 8) haben, wobei die Kolbenräume (3, 4) mit einem ersten Hydrospeicher (15) und die Ringräume (7, 8) mit einem zweiten Hydrospeicher (12) verbunden sind und ein Druckregelventil (20) vorhanden ist, das in die Druckleitung (19) zu den Ringräumen (7, 8) eingesetzt ist, **dadurch gekennzeichnet, dass** das Druckregelventil (20) durch ein Vorsteuerventil (56) gesteuert wird, das vom Zulaufdruck (P_{z}) zu den Kolbenräumen (3, 4) betätigt ist und das bei Unterschreiten eines vorgegebenen Zulaufdrucks (P_{z}) in der Zulaufleitung (16) zu den Kolbenräumen (3, 4) das Druckregelventil (20) auf eine höhere Regelstufe schaltet.

2. Vorrichtung nach Anspruch 1 **dadurch gekennzeichnet, dass** das Vorsteuerventil (56), ausgebildet als Ventil mit doppelter Umsteuerung, das Druckregelventil (20) bei niedrigem und hohem Druckniveau vom Zulaufdruck (P_{z}) auf die höhere Regelstufe schaltet.

3. Vorrichtung nach Anspruch 1 oder 2, **dadurch gekennzeichnet, dass** das Vorsteuerventil (56) ein 3/2-Wege-Magnet-Ventil ist, welches durch Drucksensor im Zulaufdruck (P_{z}) geschaltet wird.

4. Vorrichtung nach einem der Ansprüche 1 bis 3 **dadurch gekennzeichnet, dass** die Steuerleitung (42) für die Regelfeder (41) des Druckregelventils (20) an die Zuleitung (63) zu den Ringräumen (7, 8) zwischen dem Rückschlagventil (21) und den Ringräumen (7, 8) angeschlossen ist.

5. Vorrichtung nach einem der Ansprüche 1 bis 4 **dadurch gekennzeichnet, dass** die Steuerleitung (42) mit einem entsperrbaren Rückschlagventil (50) versehen ist.

6. Vorrichtung nach einem der Ansprüche 1 bis 5 **dadurch gekennzeichnet, dass** zwischen dem Anschluss (52) der Steuerleitung (42) an die Zuleitung (60) und der Verbindungsleitung (11) der Ringräume (7, 8) eine Drossel (18) eingesetzt ist.

7. Vorrichtung nach einem der Ansprüche 1 bis 6 **dadurch gekennzeichnet, dass** die Entsperrsteuerleitung (51) des Rückschlagventils (50) an die Steuerleitung (24) der Rückschlagventile (17, 21) der Zuleitungen (16, 19) angeschlossen ist.

8. Vorrichtung nach einem der Ansprüche 1 bis 7 , **dadurch gekennzeichnet, dass** der Ringraumdruck (P_{R}) in zwei Druckstufen mit einer Differenz bis zu 50 bar in Abhängigkeit vom Druck (P_{z}) in den Kolbenräumen (3, 4) geschaltet wird.

## Claims

1. Device for controlling the suspension behaviour of vehicles having greatly changed load conditions and a hydropneumatic suspension device in which spring cylinders (1, 2) are arranged between the sprung and nonsprung masses and have piston chambers (3, 4) which bear the load and annular chambers (7, 8) which surround the piston rod and to which pressure is applied, the piston chambers (3, 4) being connected to a first hydraulic accumulator (15), and the annular chambers (7, 8) being connected to a second hydraulic accumulator (12), and a pressure-regulating valve (20) being present which is inserted into the pressure line (19) leading to the annular chambers (7, 8), **characterized in that** the pressure-regulating valve (20) is controlled by a pilot control valve (56) which is activated by the inflow pressure (P_{z}) to the piston chambers (3, 4), and **in that** the pressure-regulating valve (20) is switched to a higher regulating stage when the inflow pressure (P_{z}) in the inflow line (16) leading to the piston chambers (3, 4) drops below a predefined value.

2. Device according to Claim 1, **characterized in that** the pilot control valve (56), which is embodied as a valve with double reversal, switches the pressure-regulating valve (20) to the higher regulating stage when there is a low and high pressure level from the inflow pressure (P_{z}).

3. Device according to Claim 1 or 2, **characterized in that** the pilot control valve (56) is a 3/2-way solenoid valve which is switched by a pressure sensor in the inflow pressure (P_{z}).

4. Device according to one of Claims 1 to 3, **characterized in that** the control line (42) for the regulating spring (41) of the pressure-regulating valve (20) is connected to the feed line (63) leading to the annular chambers (7, 8) between the non-return valve (21) and the annular chambers (7, 8).

5. Device according to one of Claims 1 to 4, **characterized in that** the control line (42) is provided with a releasable non-return valve (50).

6. Device according to one of Claims 1 to 5, **characterized in that** the a throttle (18) is inserted between the connection (52) of the control line (42) to the feedline (60) and the connecting line (11) for the annular chambers (7, 8).

7. Device according to one of Claims 1 to 6, **characterized in that** the release control line (51) of the non-return valve (50) is connected to the control line (24) of the non-return valves (17, 28) of the feed lines (16, 19).

8. Device according to one of Claims 1 to 7, **characterized in that** the annular chamber pressure (P_{R}) is switched in two pressure stages with a difference of up to 50 bar as a function of the pressure (P_{z}) in the piston chambers (3, 4).

## Revendications

1. Dispositif de commande de la suspension de véhicules avec des rapports de charge fortement variables et un dispositif de suspension hydropneumatique, dans lequel des vérins élastiques (1, 2) sont disposés entre les masses suspendues et les masses non suspendues, vérins qui comprennent des chambres de piston (3, 4) portant la charge et des chambres annulaires (7, 8) sous pression entourant de façon étanche la tige de piston, dans lequel les chambres de piston (3, 4) sont raccordées à un premier accumulateur hydraulique (15) et les chambres annulaires (7, 8) sont raccordées à un deuxième accumulateur hydraulique (12) et il est prévu une soupape de réglage de pression (20), qui est placée dans la conduite sous pression (19) vers les chambres annulaires (7, 8), **caractérisé en ce que** la soupape de réglage de pression (20) est commandée par une soupape de commande pilote (56) qui est actionnée par la pression d'alimentation (P_{z}) vers les chambres de piston (3, 4) et qui commute la soupape de réglage de pression (20) à un étage de réglage plus élevé lorsque l'on descend en dessous d'une pression d'alimentation prédéterminée (P_{z}) dans la conduite d'alimentation (16) vers les chambres de piston (3, 4).

2. Dispositif selon la revendication 1, **caractérisé en ce que** la soupape de commande pilote (56), formée par une soupape à double inversion, commute la soupape de réglage de pression (20) sur l'étage de réglage plus élevé pour un niveau de pression bas et haut de la pression d'alimentation (P_{z}).

3. Dispositif selon la revendication 1 ou 2, **caractérisé en ce que** la soupape de commande pilote (56) est une soupape magnétique à 3/2 voies, qui est commutée par un capteur de pression dans la pression d'alimentation (P_{z}).

4. Dispositif selon l'une quelconque des revendications 1 à 3, **caractérisé en ce que** la conduite de commande (42) pour le ressort de réglage (41) de la soupape de réglage de pression (20) est raccordée à la conduite d'alimentation (63) vers les chambres annulaires (7, 8) entre le clapet anti-retour (21) et les chambres annulaires (7, 8).

5. Dispositif selon l'une quelconque des revendications 1 à 4, **caractérisé en ce que** la conduite de commande (42) comporte un clapet anti-retour (50) déblocable.

6. Dispositif selon l'une quelconque des revendications 1 à 5, **caractérisé en ce qu'**un étranglement (18) est placé entre le raccord (52) de la conduite de commande (42) à la conduite d'alimentation (60) et la conduite de raccordement (11) des chambres annulaires (7, 8).

7. Dispositif selon l'une quelconque des revendications 1 à 6, **caractérisé en ce que** la conduite de commande de déblocage (51) du clapet anti-retour (50) est raccordée à la conduite de commande (24) des clapets anti-retour (17, 21) des conduites d'alimentation (16, 19).

8. Dispositif selon l'une quelconque des revendications 1 à 7, **caractérisé en ce que** la pression des chambres annulaires (P_{R}) est commutée en deux étages de pression présentant une différence allant jusque 50 bar en fonction de la pression (P_{z}) régnant dans les chambres de piston (3, 4).
